# EUROPÄISCHE PATENTANMELDUNG

(11) **EP 3 905 042 A1**
(43) Veröffentlichungstag der Anmeldung: **03.11.2021**
(21) Anmeldenummer: 21173063.5
(22) Anmeldetag: 03.06.2015
(51) Int. Cl.: G06F 9/50

(54) **CLIENT-SERVER-SYSTEM UND ENDGERÄT**

(30) Priorität: 17.06.2014 DE 102014108483
(62) Teilanmeldung aus: 15749968.2
(71) Anmelder: Datenlotsen Informationssysteme GmbH, 20097 Hamburg (DE)
(72) Erfinder: Maaß, Dominik, 20097 Hamburg (DE); Sachse, Stephan, 20097 Hamburg (DE)
(74) Vertreter: Weidner Stern Jeschke

(57) **Zusammenfassung**

Die Erfindung betrifft ein Client-Server-System mit einem Server und wenigstens einem ersten Client und einem zweiten Client, wobei dem ersten Client und dem zweiten Client serverseitige Rechnerressourcen zugeordnet sind, sodass insbesondere ein serverseitiges Multitasking realisiert ist, wobei der erste Client und/oder der zweite Client die dem Client serverseitig zugeordneten Rechnerressourcen eingabeabhängig aufteilt oder aufteilen, sodass ein clientseitiges und eingabeabhängiges Multitasking, insbesondere präemptives Multitasking, realisiert ist.

## Beschreibung

Die Erfindung betrifft ein Client-Server-System mit einem Server und wenigstens einem ersten Client und einem zweiten Client, wobei dem ersten Client und dem zweiten Client serverseitige Rechnerressourcen zugeordnet sind, sodass insbesondere ein serverseitiges Multitasking realisiert ist, und ein Endgerät.

Moderne Verwaltungssysteme basieren insbesondere auf der Nutzung von Datenbanken. Diese Datenbanken müssen zum einen gepflegt werden und dienen zum anderen der Auswertung oder dem Abarbeiten bestimmter Prozesse und Aufgaben. Da die Datenbanken oder genauer gesagt die darunter liegenden Datenbanksysteme zumeist auf sehr performanten Rechnersystemen arbeiten und die Nutzer meist jedoch nur einfache Rechner oder Endgeräte besitzen, werden derartige Systeme zumeist in einer Client-Server-Konfiguration betrieben.

In der US2004/230675 A1 ist eine Clientserverarchitektur mit einer adaptiven Ressourcenverteilung für Clients offenbart.

In Huitcan Zhu et al. (Demand-driven service differentiation in clustered-based network servers, proceedings ieee infocom 2001. conference on a computer communications. Twentieth annual joint conference of the ieee computer and communications society (cat. no. 01CH37213)[proceedings ieee infocom. The conference on computer communications] Piscat, Band 2, 22.April 2001 (2001-04-22 Seiten 679 bis 688, XP010538752, DOI: 10.1109/infocom.2001.916256, ISBN: 978-0-7803-7016-6). offenbart eine Serviceunterscheidung, welche priorisierte für verschiedene Klassen von Clientanfragen effektiv bearbeitet und durch Serverressourcen bereitgestellt werden. In der Aron Met al. (Cluster reserves: a mechanism for resource management in cluster-based network servers) proceedings ACM sigmetrics'2000. International conference on measurement and modeling of computer systems. Santa Clara, CA, June 17 - 21, 2000; [Proceedings of the ACM sigmetrics international conference on Measurement and modeling of computer systems] Band Volume 28 No.1, 17. Juni 2000 (2000-06-17), Seiten 90 bis 101, XP002409246, DOI: 10.1145/339331.339383, ISBN: 978-1-58113-194-9 ist ein Serverclasses offenbart, welche Ressourcenanfragen von Clients bearbeiten.

In einer derartigen Client-Server-Konfiguration stellen die einzelnen Clients Anfragen an den Server, welcher diese anschließend bearbeitet oder weiterleitet und das entsprechende Ergebnis an die Clients zurückreicht.

Insbesondere ist ein Client immer einem Benutzer zugeordnet. Dies kann zur Folge haben, dass bei umfangreicheren Anfragen an den Server durch den Client ein weiteres Arbeiten für den Client mit dem Datenbanksystem nicht möglich ist. Es sei hier als Beispiel genannt, dass insbesondere eine Statistikauswertung bei einem Hochschulverwaltungssystem erfolgen soll. Derartige Auswertungen bedürfen einer hohen Rechnerkapazität, sodass mit der Anfrage des Clients dieser - nach der Anfrage - nicht im üblichen Maße weiter arbeiten kann.

Aufgabe der Erfindung ist es, den Stand der Technik zu verbessern.

Gelöst wird die Aufgabe durch ein Client-Server-System mit einem Server und wenigstens einem ersten Client und einem zweiten Client, wobei dem ersten Client und dem zweiten Client serverseitige Rechnerressourcen zugeordnet sind, sodass insbesondere ein serverseitiges Multitasking realisiert ist, wobei der erste und/oder der zweite Client die dem Client serverseitig zugeordneten Rechnerressourcen eingabeabhängig aufteilt oder aufteilen, sodass ein clientseitiges und eingabeabhängiges Multitasking, insbesondere präemptives Multitasking, realisiert ist.

Somit können Clients, welche insbesondere auf rechenschwachen und somit leistungsarmen Endgeräten laufen, trotz zeitintensiver Abfragen weitere Tätigkeiten durchführen. Das bedeutet, dass ein Bearbeiter, welcher einen Client bedient nicht erst darauf warten muss, dass eine aktuelle Aufgabe oder ein aktueller Prozess abgeschlossen ist, sondern kann entsprechend weiterhin Aufgaben und Prozesse durchführen und beispielsweise Datenbankfelder pflegen oder weitere Abfragen tätigen.

Somit kann insbesondere ein modifiziertes paralleles Arbeiten an einen Client erfolgen. Dies eröffnet zudem ganz neue Möglichkeiten der clientseitigen Darstellung von Prozessen und Aufgaben und der clientseitigen Arbeit in einem Client-Server-System.

Folgendes Begriffliche sei erläutert.

Ein "Client-Server-System" ist eine Einrichtung, welche ein Client-Server-Modell rechnertechnisch und netzwerktechnisch umsetzt. Ein derartiges Client-Server-Modell beschreibt eine Möglichkeit, Aufgaben und Dienstleistungen innerhalb eines Netzwerks zu verteilen. Die Aufgaben werden insbesondere von Programmen ausgeführt, welche in Clients und Server unterteilt werden. Der Client kann insbesondere auf Wunsch einen Dienst des Servers anfordern (zum Beispiel ein Betriebsmittel). Der Server, welcher sich auf dem gleichen oder einen beliebigen anderen Rechner im Netzwerk befindet, beantwortet die Anforderungen beispielsweise dadurch, dass dieser die angeforderten Betriebsmittel bereitstellt.

Insbesondere umfasst vorliegend das Client-Server-System einen zentralen Datenbankserver oder mehrere dezentrale Datenbankserver, wobei die mehreren dezentralen Datenbankserver durch "einen Zentralserver" verwaltet werden können.

"Rechnerressourcen", auch Betriebsmittel genannt, umfassen insbesondere Rechenleistungen eines Prozessors, eines Co-Prozessors und/oder eines Grafikprozessors sowie Speicherressourcen, wobei die Rechnerressourcen in einem zentralen Rechner, einem dezentralen Rechnersystem oder in der Cloud zur Verfügung stehen können.

Unter "serverseitig" ist insbesondere zu verstehen, dass Rechnerressourcen umfasst sind, welche nicht von dem Client zur Verfügung gestellt werden.

Unter "Multitasking, wird auch als Mehrprozessbetrieb bezeichnet", ist vorliegend insbesondere die Fähigkeit, mehrere Aufgaben oder Dienste (Tasks) quasi nebenläufig auszuführen. Im Allgemeinen bietet ein Prozessor hierzu die unterstützenden Hardwarestrukturen, wobei dies vorliegend auch in einem Rechner oder über mehrere verteilte Rechner erfolgen kann. Die unterschiedlichen Tasks/Aufgaben werden dabei insbesondere in sehr kurzen Abständen immer wieder abwechselnd aktiviert, sodass der Eindruck der Gleichzeitigkeit (Nebenläufigkeit) entsteht. Somit ist Multitasking vorliegend insbesondere ein Synonym für ein Zeit-Multiplexverfahren.

Vorliegend kann, wenn ein Computer mehrere CPU-Kerne aufweist oder wenn mehrere Computer mit mehreren CPU-Kernen für die einzelnen Tasks verwenden werden, ein echtes gleichzeitiges Abarbeiten von Tasks erfolgen. Dieses wird auch teilweise als Multiprozessing bezeichnet, wobei dies vorliegend mit von dem Begriff Multitasking umfasst ist.

Insbesondere ist ein präemptives Multitasking umfasst. Dabei erfolgt die Abarbeitung einzelner Prozesse, Aufgaben und/oder Tasks durch einen Lastverteiler, welcher auch Scheduler genannt wird. Dieser Lastverteiler kann insbesondere Bestandteil des Betriebssystems oder in dem Server implementiert sein. Bei dem präemptiven Multitasking, wird jede Aufgabe oder jeder Dienst nach einer bestimmten Abarbeitungszeit unterbrochen.

In diesem Zusammenhang wird von Zeitschlitzen oder Zeitscheiben gesprochen. Wird ein Prozess unterbrochen so ist dieser inaktiv und gegebenenfalls andere Prozesse werden bearbeitet. Sobald dem "schlafenden" Prozess Rechnerressourcen zugeordnet werden, setzt dieser seine Arbeit fort und ist aktiv. Dabei können die Zeitschlitze konstant oder aber auch prioritätsabhängig zugeordnet sein, sodass die Zeitschlitze unterschiedliche Dauern aufweisen können.

Vorliegend bedeutet "eingabeabhängig", dass, entsprechend der von dem Client aufgerufenen Dienste, dem Client serverseitig zugeordnete Rechnerressourcen abhängig von den clientseitigen Eingaben aufgeteilt werden. So kann beispielsweise beim Auswerten einer auf dem Server liegenden oder durch den Server verwalteten Datenbank eine statistische Auswertung erstellt werden. Da ein derartiges Auswerten grundsätzlich einen etwas höheren Bearbeitungs- und Rechenaufwand benötigt als beispielsweise eine einfache Abfrage einer Datenbankinformation, können beispielsweise 80% der serverseitig zugeordneten Rechnerressourcen für diese Auswertung verwendet werden. Die übrigen 20% können dann beispielsweise für einfache Abfragen oder Einträge in die Datenbank genutzt werden.

Somit handelt es sich bei der Erfindung insbesondere um ein System, eines doppelten nachgelagerten Multitaskings in einem Client-Server-System, bei dem clientgesteuert das clientseitige Multitasking gesteuert und durch den Server das servergesteuerte Multitasking realisiert ist.

In einer weiteren Ausführungsform weist das Client-Server-System weitere Clients auf, welchen serverseitige Ressourcen zugeordnet sind und welche serverseitig zugeordnete Rechnerressourcen eingabeabhängig aufteilen.

Somit können in dem Client-Server-System mehrere Clients zur Verfügung gestellt werden, welche jeweils einem Bediener ein quasi paralleles Arbeiten ermöglichen.

Um durch einen der Clients unterschiedliche Aufgaben oder Anwendungen serverseitig bearbeiten zu können, kann einer der Clients derart eingerichtet sein, dass ein Dienst oder das mehrere insbesondere unterschiedliche Dienste des Servers direkt und/oder indirekt aufrufbar sind.

Unter "Dienste" sind sämtliche Aufgaben, Tasks und Prozesse zu verstehen, welche die Rechnerressourcen nutzen. Insbesondere sind dabei Datenbankabfragen, Datenbankmodifikationen, Datenbankauswertungen, Speichern von Daten, Modifizieren von Datenbankinformationen, Druckaufträge, Sendeaufträge, Erstellen von Vorlagen, Einscannen von Dokumenten oder dergleichen umfasst.

Unter einem "direkten" Aufruf ist ein Dienst zu verstehen, der direkt durch den Client aufgerufen wird und von dem Datenbanksystem abgearbeitet wird.

Unter einem "indirekten" Aufruf, sind abgeleitete Dienste oder Dienste zu verstehen, welche beispielsweise an eine Zwischenschicht, wie beispielsweise einen XPA-Layer, gesandt werden und welche somit über den Umweg der Zwischenschicht auf die Datenbank wirken. Eine derartige Zwischenschicht kann insbesondere den "Gesamtserver" realisieren.

In einer weiteren Ausführungsform umfasst der Server eine Datenbank oder mehrere Datenbanken und/oder ein Datenbanksystem oder mehrere Datenbanksysteme. Somit kann der Client insbesondere eine einzelne Datenbank oder mehrere Datenbanken oder ein einzelnes Datenbanksystem oder mehrere Datenbanksysteme manipulieren, auswerten oder ein Dienst dieser Datenbanken oder Datenbanksystemen aufrufen.

Eine "Datenbank", auch "Datenbanksystem (DBS)" genannt, ist ein System zur elektronischen Datenverwaltung. Die wesentliche Aufgabe eines Datenbanksystem ist es insbesondere, große Datenmengen effizient, widerspruchsfrei und dauerhaft zu speichern und benötigte Teilmengen in unterschiedlichen bedarfsgerechten Darstellungsformen für den Benutzer und Anwendungsprogramme bereitzustellen. Vorliegend werden insbesondere derartige Anwendungsprogramme mittels des Clients dem Benutzer zur Verfügung gestellt.

Ein Datenbanksystem besteht im Wesentlichen aus zwei Teilen, der Verwaltungssoftware, wird auch als Datenbankmanagementsystem bezeichnet, und der Menge der zu verwaltenden Daten, der Datenbank im engeren Sinn, welche zum Teil auch als Datenbasis bezeichnet wird. Die Verwaltungssoftware organisiert intern die strukturierte Speicherung der Daten und kontrolliert alle lesenden und schreibenden Zugriffe auf die Datenbank. Zur Abfrage und Verwaltung bietet das Datenbanksystem im Allgemeinen eine Datenbanksprache an, auf welche vorliegend der Client entweder direkt oder beispielsweise über eine Zwischenschicht wie beispielsweise einen XPA-Layer zugreifen kann. Insbesondere handelt es sich bei den Datenbanken oder Datenbanksystemen um relationale Datenbanken oder relationale Datenbanksysteme.

Um das serverseitige Multitasking zu realisieren, kann das Client-Server-System insbesondere einen Lastverteiler und/oder eine Datenbank-Meta-Beschreibungseinrichtung aufweisen, wobei die Datenbank-Meta-Beschreibungs-Einrichtung insbesondere einen einheitlichen Zugriff auf mehrere Datenbanken und/oder Datenbankensysteme ermöglicht.

Der "Lastverteiler" wird auch als Scheduler bezeichnet. Dieser Lastverteiler kann insbesondere die Rechnerressourcen auf die einzelnen Clients aufteilen. Dabei kann die Aufteilung sowohl jeweils mit konstanten Zeitscheiben oder auch abhängig von aufgerufenen Diensten erfolgen und dem Client zur Verfügung gestellt werden.

Die "Datenbank-Meta-Beschreibungseinrichtung" setzt insbesondere eine Datenbank-Meta-Beschreibungsschicht um. Ein typischer Vertreter dieser Datenbank-Meta-Beschreibungseinrichtung ist insbesondere die Software XPA der Firma Magic®, welche auf einen Rechner aufgespielt ist. Eine derartige Datenbank-Meta-Beschreibungsschicht ermöglicht es insbesondere heterogene Datenbanken oder mehrere Datenbanken einheitlich anzusprechen, da in dieser Datenbank-Meta-Beschreibungseinrichtung eine abstrahierte Darstellung und Bearbeitung der darunter liegenden Datenbanken/Datenbanksysteme erfolgt.

So werden beispielsweise lediglich die Anzahl der Tabellen und die entsprechenden Spalten der Tabelle mit dem jeweiligen Speichertyp hinterlegt. Die eigentliche Datenbankrealisierung wird dann jeweils für die einzelne Datenbank separat angesprochen, sodass lediglich über die Datenbank-Meta-Beschreibungseinrichtung oder -Schicht eine Umgebung geschaffen wird, durch die einheitlich auf unterschiedliche Datenbanken zugegriffen werden kann.

In einer diesbezüglichen Ausführungsform verteilt die Datenbank-Meta-Beschreibungseinrichtung oder der Lastverteiler die serverseitigen Rechnerressourcen an die Clients. Somit wird ein indirekter Zugriff der Clients auf die darunter liegenden Datenbanken realisiert.

Um ein dynamisches präemptives clientseitiges Multitasking zu realisieren, kann eine Abhängigkeit eines aufgerufenen Dienstes oder eines Ergebnisses eines aufgerufenen Dienstes oder mehrerer aufgerufener Dienste oder Ergebnisse mehrerer aufgerufener Dienste von einem anderen Dienst oder von einem anderen Ergebnis eines Dienstes bei dem clientseitig eingabeabhängigen Aufteilen berücksichtigt werden.

So können beispielsweise zwei quasi parallel durch einen Bediener aufgerufene Dienste sich derart gegenseitig beeinflussen, dass beispielsweise eine Datenbankfeldänderung durch den einen Dienst beispielsweise das Ergebnis einer Auswertung beeinflusst. In diesem Fall kann insbesondere das clientseitige Aufteilen der serverseitig zugeordneten Rechnerressourcen angepasst werden.

Beispielsweise können bestimmte Dinge in parallelen Prozessoren abgearbeitet werden oder es werden bestimmte Berechnungen bei der Auswertung auf einen späteren Zeitpunkt verlagert, sodass erst das geänderte Datenbankfeld eingetragen wird und anschließend die abschließende Auswertung beendet wird, in dem dieses geänderte Datenbankfeld berücksichtigt wird.

Um den Bediener eines Clients bestimmte Ergebnisse anzeigen zu können, kann das Client-Server-System und insbesondere der Client eine Darstellungseinrichtung aufweisen. Eine derartige Darstellungseinrichtung kann ein Monitor oder ein Bildschirm beispielsweise eines Tablets oder eines Smartphones sein.

Um einen Bediener eines Clients seine quasi parallel arbeitende Aufgaben und Prozesse anzeigen zu können, kann ein Client derart eingerichtet sein, dass ein aufgerufener Dienst oder ein Ergebnis eines aufgerufenen Diensts oder mehrere aufgerufene Dienste oder Ergebnisse mehrerer aufgerufener Dienste, insbesondere mittels einer Reiterstruktur, mittels der Darstellungseinrichtung dargestellt werden.

So kann beispielsweise die statistische Auswertung der Datenbank auf einem ersten Reiter und beispielsweise das Anlegen eines Studenten inklusive der damit zu manipulierenden Datenbankfelder auf einem zweiten Reiter angezeigt werden.

Um strukturell zueinander zugehörige parallel ablaufende Dienste einen Benutzer eines Clients darstellen zu können, kann der Client derart eingerichtet sein, dass aufgerufene zueinander abhängige Dienste zusammengehörig, insbesondere mittels einer Familienreiterstruktur, mittels der Darstellungseinrichtung darstellbar sind, sodass eine kontextbasierte Darstellung realisierbar ist.

So kann beispielsweise bei einer Studierendenverwaltungssoftware für einen Studenten die Adresse geändert und zeitgleich ein Zwischenzeugnis ausgedruckt werden. So sind beispielsweise unter dem Hauptreiter das Erstellen des Zwischenzeugnisses und auf einem Nebenreiter (Kind- oder Enkel-Reiter) die zu ändernden Adressdaten angezeigt. Aufgrund dessen, dass vorliegend die Adresse geändert wird, stellt zwar der Dienst sämtliche Noten und zugehörigen Credits des Studenten zusammen, wartet jedoch auf die abgeschlossene Eingabe der neuen Adressdaten, damit das Zeugnis schon diese neuen Adressdaten aufweist.

Somit ist dem Bediener klar, dass vorliegend beide Dienste nicht unabhängig voneinander abgeschlossen werden können und einheitlich zusammen gehören.

In einem weiteren Aspekt der Erfindung wird die Aufgabe gelöst durch ein Endgerät, insbesondere Laptop, Tablet, Mobilfunktelefon, Smartwatch oder Desktop, welches derart eingerichtet ist, dass ein Client in einem zuvor beschriebenen Client-Server-System realisiert ist.

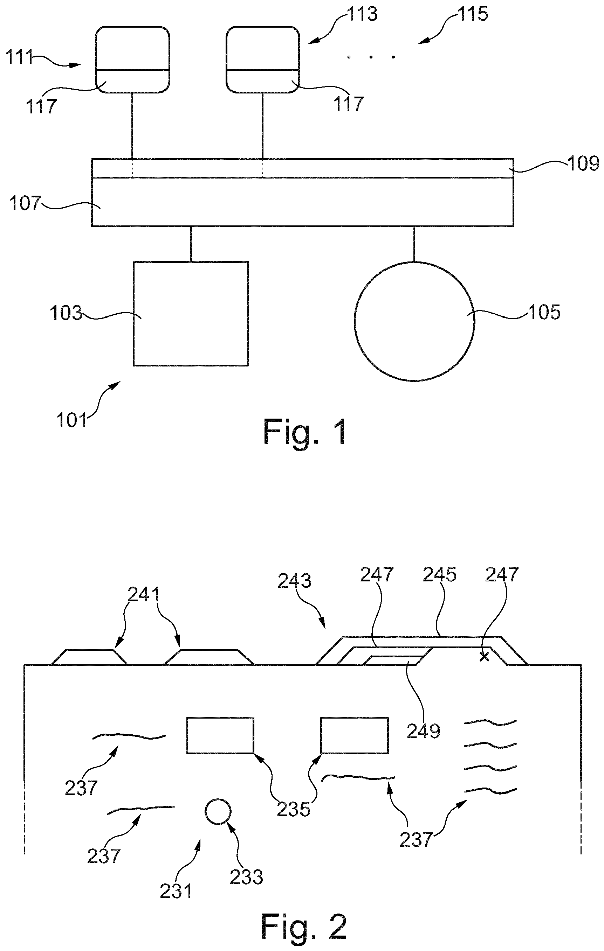

Im Weiteren wird die Erfindung anhand von Ausführungsbeispielen erläutert. Es zeigen
- Figur 1: eine schematische Darstellung eines Client-Server-Modells und
- Figur 2: eine Familien-Reiterstruktur für eine Hochschulverwaltungssoftware.

Ein Client-Server-System 101 umfasst ein SQL Datenbanksystem 103 und ein SAP Datenbanksystem 105. Oberhalb der Datenbanksysteme 103, 105 ist ein XPA-Layer der Firma Magic® angeordnet. Mit der zugehörigen XPA-Software ist in dem XPA-Layer 107 ein Server-Lastverteiler 109 realisiert. Der XPA-Schicht 107 und dem Server-Lastverteiler 109 sind ein erster Client 111, ein zweiter Client 113 und weitere Clients 115 zugeordnet. Die Clients 111, 113, 115 weisen jeweils einen Client-Lastverteiler 117 auf.

Die XPA-Schicht 107 bildet eine abstrahierte Darstellung der darunter liegenden Datenbanksysteme 103, 105. Über clientseitige Zugriffe können Datenbankabfragen oder Manipulationen der einzelnen Datenbanksysteme 103, 105 und insbesondere der darunter liegenden Tabellen und zugehörigen Felder erfolgen.

Sowohl das SQL Datenbanksystem 103 als auch das SAP Datenbanksystem 105 sind auf verschiedenen leistungsfähigen Rechnern verortet. Über ein Netzwerk erfolgt der Zugriff mittels der XPA-Schicht, welche wiederrum durch einen Rechner umgesetzt ist. Da vorliegend die XPA-Schicht die einzelnen Zugriffe steuert, werden die entsprechenden Rechnerressourcen der Rechner der darunter liegenden Datenbanksysteme 103, 105 an die entsprechenden Clients 111, 113, 115 verteilt.

Die Clients 111, 113, 115 sind einfache Bürostandardrechner, auf welchen vorliegend eine Hochschulverwaltungssoftware arbeitet, welche durch die jeweiligen Bediener bedient werden kann. Das darunter liegende Datenbanksystems (DBS) ist vorliegend das SQL Datenbanksystem 103. Zusätzlich ist eine Personaldatenbank 105 (hier das SQL-DBS) vorliegend ebenfalls abfragbar, da dort die Personaldaten zu den Professoren abgelegt sind und verwaltet werden.

Vorliegend verteilt der serverseitige Lastverteiler 109 Rechnerressourcen gleichmäßig (mit gleichen Zeitintervallen) auf die Clients 11, 113, 115, sodass jeder Client 111, 113, 115 insbesondere die gleiche Zugriffszeit auf den Rechner der XPA-Schicht und/oder auf die Rechner der Datenbanksysteme 103, 105 zugeordnet ist.

Wird nun beispielsweise am ersten Client 111 eine Auswertung gestartet, in welcher beispielsweise die derzeitigen Studierenden aufgeschlüsselt nach Länder, Fächer und Alter abgefragt werden, wird für diese Aufgabe nun clientseitig 80% der dem Client durch den Server-Lastverteiler 109 zugewiesenen Zeit verwendet.

Parallel zu dieser Auswertung, legt der Bediener des ersten Clients 111 beispielsweise einen neuen Studenten mit seinen entsprechenden Daten an. Für diese Tätigkeit werden jeweils 20% der durch den Server-Lastverteiler 109 zugewiesenen Zeit verwendet.

Wird nun beispielsweise noch ein Zwischenzeugnis für einen Studenten erzeugt, teilt sich beispielsweise die durch den Server-Lastverteiler 109 zugeordnete Zeit derart auf, dass 60% der Zeit für die Auswertung, 30% für die Zeugniserstellung und 10% für das Anlegen des Studenten verwendet werden.

Insbesondere während des Zeitaufteilens zwischen den einzelnen Aufgaben wird geprüft, ob ein Bediener clientseitig neue Aufgaben oder Tasks initiiert, sodass dann entsprechend die neue Zeitverteilung erfolgt. Somit kann ein paralleles und kontinuierliches Arbeiten gewährleistet werden, ohne dass der Bediener des Clients auf beispielsweise das Ergebnis der Auswertung warten muss.

Dies ermöglicht nicht nur ein paralleles neuartiges Arbeiten, sondern es kann auch eine gänzlich andere Darstellung für den Bediener ermöglicht werden.

So kann ein Bediener ein gänzlich neues Graphik-User-Interface (GUI)233 zur Verfügung gestellt werden.

Insbesondere werden abhängige Prozesse übersichtlich dargestellt. Dabei sind abhängige Prozesse derartige Aufgaben, An- oder Abfragen der Datenbank, die sich beispielsweise vorliegend auf einen Studenten beziehen oder bei dem bestimmte Datenbankfelder auf eine weitere Abfrage oder auf eine weitere Aufgabe einen Einfluss haben. So erfolgt in einem ersten Schritt eine allgemeine Abfrage zu einem Studenten. Diese Abfrage wird dann über den Eltern-Reiter 245 dargestellt.

Weiterhin erfolgt zu diesem Studenten eine Änderung der Stammdaten. Dies wird dann mittels des Kind-Reiters 247 dargestellt.

Zudem wird durch den Bediener für diesen Studenten auch noch zusätzlich ein Zwischenzeugnis angefordert, wobei der Vorgang über den Enkel-Reiter 249 dargestellt wird.

Parallel erfolgt zu dem Kind-Reiter 247 eine Kursbelegung 247. Wird der Reiter 247 mit der Kursbelegung aufgerufen, so zeigt die entsprechende GUI 231 gewisse Datenbankfelder 235 mit bestimmten Zusatzinformationen 237 an.

Zudem wird durch eine Checkbox 233 ein entsprechender Kurs allokiert.

Zu dem Vorgang mit dem Studenten werden vorliegend zu dem Eltern-Reiter 245 weitere parallele Aufgaben durchgeführt, welche mit den Reitern 241 dargestellt sind. Bei diesen parallelen Aufgaben handelt es sich vorliegend um zwei unterschiedliche Auswertungen.

### Bezugszeichenliste

- 101: Client-Server-System
- 103: SQL Datenbanksystem
- 105: SAP Datenbanksystem
- 107: XPA-Layer
- 109: Server-Lastverteiler
- 111: erster Client
- 113: zweiter Client
- 115: weitere Clients
- 117: Client-Lastverteiler
- 231: Graphik-User-Interface (GUI)
- 233: Checkbox
- 235: Datenbankfeld
- 237: Benutzerinformation
- 241: Reiter
- 243: Reiter Familie
- 245: Eltern-Reiter
- 247: Kind-Reiter
- 249: Enkel-Reiter

## Patentansprüche

1. Client-Server-System mit einem Server und wenigstens einem ersten Client und einem zweiten Client, wobei dem ersten Client und dem zweiten Client serverseitige Rechnerressourcen zugeordnet sind, **dadurch gekennzeichnet, dass** der erste Client die dem ersten Client serverseitig zugeordneten Rechnerressourcen eingabeabhängig aufteilt, sodass ein clientseitiges und eingabeabhängiges Zeitmultiplexverfahren und somit ein modifiziertes paralleles Arbeiten des ersten Clients realisiert ist.

2. Client-Server-System nach Anspruch 1, **gekennzeichnet durch** weitere Clients, welchen serverseitige Ressourcen zugeordnet sind und welche serverseitig zugeordnete Rechnerressourcen eingabeabhängig aufteilen.

3. Client-Server-System nach einem der vorherigen Ansprüche, **dadurch gekennzeichnet, dass** einer der Clients derart eingerichtet ist, dass ein Dienst oder dass mehrere, insbesondere unterschiedliche, Dienste des Servers direkt und/oder indirekt aufrufbar sind.

4. Client-Server-System nach einem der vorherigen Ansprüche, **dadurch gekennzeichnet, dass** der Server eine Datenbank oder mehrere Datenbanken und/oder ein Datenbanksystem oder mehrere Datenbanksysteme umfasst.

5. Client-Server-System nach einem der vorherigen Ansprüche, **gekennzeichnet durch** einen Lastverteiler und/oder durch eine Datenbank-Meta-Beschreibungs-Einrichtung, welche insbesondere einen einheitlichen Zugriff auf mehrere Datenbanken und/oder Datenbanksysteme ermöglicht.

6. Client-Server-System nach Anspruch 5, **dadurch gekennzeichnet, dass** die Datenbank-Meta-Beschreibungs-Einrichtung oder der Lastverteiler die serverseitigen Rechnerressourcen an die Clients verteilt.

7. Client-Server-System nach einem der Ansprüche 3 bis 6, **dadurch gekennzeichnet, dass** eine Abhängigkeit eines aufgerufenen Diensts oder eines Ergebnisses eines aufgerufenen Dienstes oder mehrerer aufgerufener Dienste oder Ergebnisse mehrerer aufgerufener Dienste von einem anderen Dienst oder von einem anderen Ergebnis eines Dienst bei dem clientseitigen eingabeabhängigen Aufteilen berücksichtigt ist.

8. Client-Server-System nach einem der vorherigen Ansprüche, **dadurch gekennzeichnet, dass** einer der Clients eine Darstellungseinrichtung aufweist.

9. Client-Server-System nach Anspruch 6 oder 7, **dadurch gekennzeichnet, dass** ein Client derart eingerichtet ist, dass ein aufgerufener Dienst oder ein Ergebnis eines aufgerufenen Dienstes oder mehrere aufgerufene Dienste oder Ergebnisse mehrerer aufgerufener Dienste, insbesondere mittels einer Reiterstruktur, mittels der Darstellungseinrichtung darstellbar ist oder sind.

10. Client-Server-System nach Anspruch 7 oder 8, **dadurch gekennzeichnet, dass** der Client derart eingerichtet ist, dass aufgerufene zueinander abhängige Dienste zusammengehörig, insbesondere mittels einer Familienreiterstruktur, mittels der Darstellungseinrichtung darstellbar sind, sodass eine kontextbasierte Darstellung realisierbar ist.

11. Endgerät, insbesondere Laptop, Tablet, Mobilfunktelefon, Smart-Watch oder Desktop, welches derart eingerichtet ist, dass ein Client in einem Client-Server-System nach einem der vorherigen Ansprüche realisiert ist.
